(19) Europäisches Patentamt / European Patent Office / Office européen des brevets

(11) **EP 3 742 236 B1**

(12) **FASCICULE DE BREVET EUROPÉEN**

(45) Date de publication et mention
de la délivrance du brevet:
**09.04.2025 Bulletin 2025/15**

(21) Numéro de dépôt: **19176099.0**

(22) Date de dépôt: **23.05.2019**

(51) Classification Internationale des Brevets (IPC):
**G04B 15/14** *(2006.01)* **G04B 17/32** *(2006.01)*
**G04B 17/34** *(2006.01)*

(52) Classification Coopérative des Brevets (CPC):
**G04B 17/32; G04B 15/14; G04B 17/34**

(54) **DISPOSITIF HORLOGER COMPRENANT UN PREMIER COMPOSANT FIXÉ SUR UN DEUXIÈME COMPOSANT PAR DÉFORMATION PLASTIQUE**

UHRVORRICHTUNG, DIE EINE ERSTE KOMPONENTE UMFASST, DIE AUF EINER ZWEITEN KOMPONENTE DURCH PLASTISCHE VERFORMUNG FIXIERT IST

TIMEPIECE DEVICE COMPRISING A FIRST COMPONENT ATTACHED TO A SECOND COMPONENT BY PLASTIC DEFORMATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**25.11.2020 Bulletin 2020/48**

(73) Titulaire: **ROLEX SA**
**1211 Genève 26 (CH)**

(72) Inventeurs:
• **CARRENO, William**
**1202 Genéve (CH)**
• **DUMAS, Aurélien**
**2560 Nidau (CH)**

(74) Mandataire: **Moinas & Savoye SARL**
**27, rue de la Croix-d'Or**
**1204 Genève (CH)**

(56) Documents cités:
**EP-A1- 2 469 356     EP-A1- 3 617 811**
**CH-A2- 699 680**

## Description

L'invention concerne un dispositif horloger comprenant deux composants fixés l'un à l'autre. L'invention concerne encore un procédé de réalisation d'un tel dispositif horloger. L'invention concerne aussi un mouvement horloger comprenant un tel dispositif horloger. L'invention concerne enfin une pièce d'horlogerie comprenant un tel dispositif horloger ou un tel mouvement horloger.

On connaît de la demande de brevet WO2013064390A1 différentes variantes d'oscillateurs prenant respectivement la forme d'un balancier-spiral. Dans chacune de ces exécutions, les éléments constitutifs de l'oscillateur sont chassés sur un axe de balancier. Dans une variante de réalisation particulière, un plateau de balancier chemise l'axe de balancier sur quasiment l'entier de sa hauteur, laissant seulement apparaître les pivots disposés au niveau de chacune des extrémités de l'axe. Si une telle conception est avantageuse en regard de la simplicité de la géométrie de l'axe de balancier, dont le corps principal se présente ici sous une forme cylindrique lisse, celle-ci n'est pas optimale dans la mesure où les forces induites par le chassage du plateau pourraient s'avérer trop conséquentes pour l'axe de balancier, en particulier si ces forces sont prévues pour être reprises par un pivot d'axe dont les dimensions sont très sensiblement inférieures à celles du corps de l'axe de balancier. Une autre solution, proposée dans le document EP2469356A1, est celle d'ajourer la pièce à assembler.

Le but de l'invention est de fournir un dispositif horloger alternatif aux dispositifs horlogers connus de l'art antérieur et améliorant les dispositifs horlogers connus de l'art antérieur. En particulier, l'invention propose un dispositif horloger permettant d'éviter l'application d'efforts importants de chassage. La présente invention concerne également un procédé de réalisation d'un tel dispositif horloger.

Selon l'invention, un dispositif horloger est défini par les revendications 1 et 13.

Différents modes de réalisation du dispositif horloger sont définis par les revendications 2 à 9.

Selon l'invention, un procédé de réalisation d'un dispositif horloger est défini par la revendication 10.

Selon l'invention, un mouvement horloger est défini par la revendication 12. 12.

Selon l'invention, une pièce d'horlogerie est définie par la revendication 13.

Les figures annexées représentent, à titre d'exemple, trois modes de réalisation d'une pièce d'horlogerie selon l'invention.

La figure 1 est une vue schématique en coupe longitudinale d'un premier mode de réalisation d'une pièce d'horlogerie comprenant un premier mode de réalisation d'un dispositif horloger.

La figure 2 est une vue en coupe longitudinale d'un premier composant du premier mode de réalisation du dispositif horloger.

La figure 3 est une vue en perspective du premier mode de réalisation du dispositif horloger.

La figure 4 est une vue en coupe longitudinale du premier mode de réalisation du dispositif horloger, le dispositif étant disposé dans un posage, lors de son procédé de réalisation, en particulier lors de la déformation plastique du premier composant.

La figure 5 est une vue schématique en coupe longitudinale d'un deuxième mode de réalisation d'une pièce d'horlogerie comprenant un deuxième mode de réalisation d'un dispositif horloger.

La figure 6 est une vue schématique en coupe longitudinale d'un troisième mode de réalisation d'une pièce d'horlogerie comprenant un troisième mode de réalisation d'un dispositif horloger.

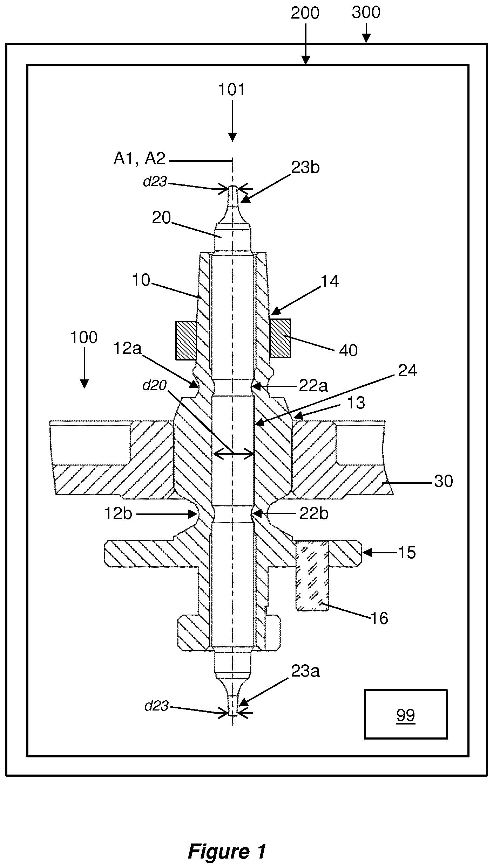

Un premier mode de réalisation d'une pièce d'horlogerie 100 est décrit ci-après en référence aux figures 1 à 4. La pièce d'horlogerie peut être une montre, en particulier une montre-bacelet.

La pièce d'horlogerie comprend un mouvement horloger 200. De préférence, ce mouvement horloger est un mouvement mécanique, en particulier un mouvement automatique.

Le mouvement horloger 200 comprend un dispositif horloger 100 monté mobile en rotation relativement à un bâti 99 du mouvement.

Le dispositif horloger 100 comprend :

- un premier composant 10 comprenant au moins une portion 12a, 12b plastiquement déformable, et
- un deuxième composant 20 doté d'une surface 24, notamment une surface de révolution et/ou de guidage et/ou de fixation du premier composant relativement au deuxième composant.

Le premier composant est fixé à demeure sur le deuxième composant par déformation plastique de l'au moins une portion 12a, 12b à l'encontre du deuxième composant, dans un plan perpendiculaire ou sensiblement perpendiculaire à un axe A2 de ladite surface 24 du deuxième composant.

De préférence, le deuxième composant 20 est également doté d'un élément 23a, 23b de guidage et/ou de fixation du dispositif horloger 100 relativement au mouvement horloger, en particulier relativement au bâti 99 du mouvement horloger.

Dans ce premier mode de réalisation, le dispositif horloger 100 est un balancier 100 d'un oscillateur 101 du type balancier-spiral. L'oscillateur comprend le balancier et un spiral 40. Le balancier est donc monté mobile en rotation dans des paliers rapportés dans le bâti 99 du mouvement horloger.

Par « balancier », on entend ici un balancier assemblé, c'est-à-dire un ensemble comprenant au moins un volant d'inertie 30 et un axe 20 de balancier.

Le balancier ou balancier assemblé comprend ici un premier composant se présentant sous la forme d'un plateau 10, ainsi qu'un deuxième composant se présentant sous la forme d'un axe 20 de balancier.

L'axe 20 de balancier a, pour axe géométrique, l'axe A2. Cet axe A2 est l'axe de révolution de l'axe de balancier, notamment de la surface 24 de l'axe 20 de balancier.

Le balancier ou balancier assemblé présente ici la spécificité de comprendre le plateau 10 qui est fixé sur l'axe 20 de balancier non pas par chassage comme cela est connu de l'art antérieur, mais par sertissage, à savoir par déformation plastique de l'au moins une portion 12a, 12b du plateau 10 à l'encontre de l'axe 20 de balancier, dans un plan perpendiculaire ou sensiblement perpendiculaire à l'axe 20 de balancier, en particulier à l'axe A2 de révolution de l'axe 20 de balancier, notamment de la surface 24 de l'axe 20 de balancier.

Le balancier 100 comprend un plateau 10 qui chemise ou recouvre l'axe 20 de balancier sur quasiment l'entier de sa hauteur. Par exemple, le plateau 10 recouvre l'axe 20 sur toute sa longueur à l'exception des pivots, et éventuellement à l'exception des tigerons. Alternativement, le plateau peut chemiser ou recouvrir une portion plus réduite de l'axe. De préférence, le plateau chemise ou recouvre une portion d'au moins 50%, voire au moins 70%, de la longueur totale de l'axe 20.

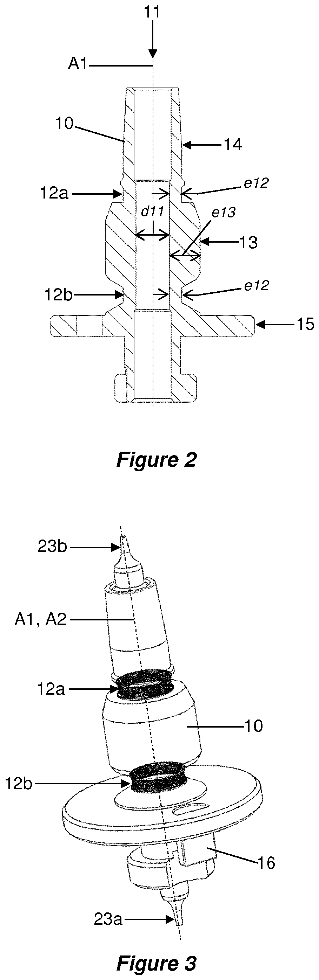

Le plateau 10 présente une structure tubulaire comprenant une ouverture 11 traversante d'axe A1 au sein de laquelle l'axe 20 de balancier est prévu pour se loger. Ce plateau 10 comprend en outre au moins une portion 12a, 12b de moindre résistance mécanique qui est apte à être déformée plastiquement par un outil adapté, par exemple une pince. Sur la figure 2, le plateau est représenté avant sa déformation plastique permettant sa fixation sur l'axe 20.

Une fois le plateau 10 assemblé, notamment fixé, sur l'axe 20 de balancier, l'axe A1 est parallèle à l'axe A2, en particulier coïncidant avec l'axe A2.

Le plateau 10 peut comprendre également une portion 13 de réception du volant d'inertie 30.

Le plateau 10 peut comprendre également une portion 14 de réception d'une virole 40 d'un ressort-spiral (non représenté).

Le plateau 10 peut comprendre également une portion 15 se présentant sous la forme d'un disque comprenant une cheville 16.

Préférentiellement, le volant d'inertie 30 est assemblé par chassage sur la portion 13 de réception.

Préférentiellement, la virole 40 est assemblée par chassage sur la portion 14 de réception.

Préférentiellement encore, la portion 15 est venue de matière du plateau 10, c'est-à-dire que le plateau et la portion 15 sont monoblocs. Alternativement, la portion 15 pourrait être rapportée sur le plateau, par exemple par chassage.

L'épaisseur e12 de paroi du plateau 10 au niveau de l'au moins une portion 12a, 12b est sensiblement inférieure à celle de l'épaisseur e13 de paroi au niveau de la portion 13 de réception. En particulier :

$$e12 < e13/2 \; ;$$

et/ou

e12 < 0.2 mm, voire e12 < 0.15 mm, voire e12 < 0.12 mm.

Préférentiellement, le plateau 10 comprend deux portions 12a, 12b de moindre résistance mécanique, qui sont disposées de part et d'autre de la portion 13 de réception du volant d'inertie 30 le long de l'axe A1.

Tout ou partie de ces portions 12a, 12b est apte à être déformée plastiquement à l'encontre de l'axe 20, dans un plan perpendiculaire ou sensiblement perpendiculaire à l'axe A1 ou à l'axe A2.

Chacune des portions 12a, 12b peut, par exemple, être déformée plastiquement de manière ponctuelle. Plus particulièrement, la portion 12a, 12b peut comprendre, dans l'ouverture 11, des saillies ou des bosses induites par des déformations plastiques localisées du matériau constitutif de la portion 12a, 12b autour de l'axe A1 ou de l'axe A2.

Préférentiellement, le matériau de la portion 12a, 12b peut être déformé plastiquement sur l'entier de la surface de la portion 12a, 12b, notamment sur l'entier de la surface de révolution de la portion 12a, 12b. Autrement dit, la portion 12a, 12b peut faire l'objet d'un sertissage annulaire, ce qui permet de déformer plastiquement la portion 12a, 12b sur 360 degrés autour de l'axe A1 ou de l'axe A2 comme représenté sur la figure 3.

Les épaisseurs e12 de paroi des portions 12a, 12b peuvent être identiques. Alternativement, les épaisseurs e12 de paroi des portions 12a, 12b peuvent être différentes.

Selon l'invention, le deuxième composant, notamment l'axe 20, en particulier la surface 24, comprend une portion 22a, 22b de réception disposée au niveau de la portion 12a, 12b lorsque l'axe est inséré au sein de l'ouverture 11 du plateau, dans laquelle le matériau déformé plastiquement au niveau de la portion 12a, 12b vient se loger. La portion 22a, 22b peut, par exemple, se présenter sous la forme d'une gorge ou d'une rainure s'étendant sur 360° autour de l'axe A2, notamment lorsque la portion 12a, 12b est déformée plastiquement sur 360 degrés autour de l'axe A1 ou de l'axe A2. Alternativement, la portion 22a, 22b peut s'étendre sur un angle inférieur à 360°. Chaque portion 22a, 22b, peut comprendre plusieurs parties, notamment quatre parties, équi-réparties ou non autour de l'axe A2.

Cette rainure ou cette gorge peut présenter une section en forme de U, comme représenté sur les figures 1 et 3. Alternativement, elle peut présenter une forme en V, ou une forme en créneau ou rectangulaire.

Avantageusement, la ou les déformations plastiques d'une ou plusieurs portions 12a, 12b permettent une tenue en couple du plateau 10 sur l'axe 20 qui est supérieure à 3 mN.m, voire supérieure à 5 mN.m. Avantageusement, la tenue en couple du plateau 10 sur l'axe 20 est suffisante pour permettre une fixation à demeure du plateau 10 sur l'axe 20, sur lequel un volant d'inertie 30 d'inertie supérieure à 5 mg.cm$^2$, voire supérieure à 10 mg.cm$^2$, est rapporté.

Avantageusement, le matériau de l'axe 20 est choisi de sorte que ce dernier supporte la force de compression induite par la pince lors de l'étape de déformation plastique d'une portion 12a, 12b du plateau 10. Plus particulièrement, le matériau de l'axe 20 est choisi de sorte que l'étape de déformation plastique d'une portion 12 du plateau 10 ne vienne pas prétériter l'intégrité géométrique dudit axe.

Avantageusement, le matériau du plateau 10, notamment de l'au moins une zone 12a, 12b, est choisi de sorte à pouvoir être déformé plastiquement. Préférentiellement, le matériau du plateau 10 est un alliage cuivreux, tel qu'un alliage CuBe2 ou un alliage CuNiSn comme un alliage CuNi15Sn8 ou « ToughMet ». Un tel alliage a pour avantage de présenter une excellente aptitude à la déformation. Sa dureté peut être de l'ordre de 250 Hv, et aller jusqu'à 400 Hv après traitement thermique.

Préférentiellement, la dureté Vickers du matériau choisi pour le plateau 10 est de 2 à 6 fois plus petite que celle du matériau choisi pour l'axe 20.

L'élément de guidage et/ou de fixation 23a, 23b comprend de préférence des pivots 23a, 23b, notamment des pivots ayant une géométrie de révolution d'axe A2. Ces pivots coopèrent de préférence avec des paliers prévus dans le bâti du mouvement horloger pour guider le dispositif horloger par rapport au bâti du mouvement relativement à l'axe A2.

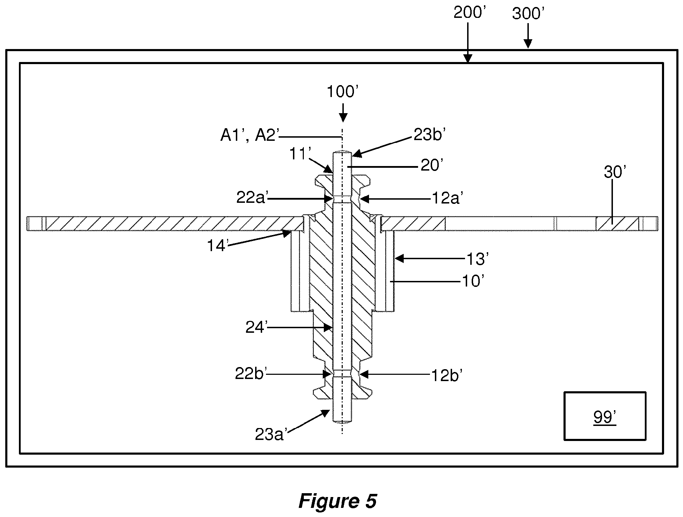

Un deuxième mode de réalisation d'une pièce d'horlogerie 100' est décrit ci-après en référence à la figure 5. La pièce d'horlogerie peut être une montre, en particulier une montre-bracelet.

La pièce d'horlogerie comprend un mouvement horloger 200'. Le mouvement horloger est un mouvement électronique ou un mouvement mécanique, en particulier un mouvement automatique.

Le mouvement horloger 200' comprend un dispositif horloger 100' monté mobile en rotation relativement à un bâti 99' du mouvement.

Le dispositif horloger 100' comprend :

- un premier composant 10' comprenant au moins une portion 12a', 12b' plastiquement déformable, et
- un deuxième composant 20' doté d'une surface 24', notamment une surface de révolution et/ou de guidage et/ou de fixation du premier composant relativement au deuxième composant.

Le premier composant est fixé à demeure sur le deuxième composant par déformation plastique de l'au moins une portion à l'encontre du deuxième composant, dans un plan perpendiculaire ou sensiblement perpendiculaire à un axe A2' de ladite surface 24' du deuxième composant.

De préférence, le deuxième composant 20' est également doté d'un élément 23a', 23b' de guidage et/ou de fixation du dispositif horloger relativement au mouvement horloger, en particulier relativement au bâti du mouvement horloger.

Dans ce deuxième mode de réalisation, qui ne fait pas partie de l'invention, le dispositif horloger est un mobile denté 100', par exemple un mobile 100' de petite moyenne d'une chaîne de finissage du mouvement horloger.

La structure globale du dispositif horloger reste la même que celle décrite précédemment pour le premier mode de réalisation.

Le mobile 100' comprend, comme premier composant, un pignon 10' qui chemise ou recouvre le deuxième composant 20'. Le deuxième composant est un axe 20' de pivotement. Le pignon 10' chemise l'axe 20' de pivotement sur quasiment l'entier de sa hauteur. L'axe 20' est principalement cylindrique et lisse. Dans le cas présent, l'axe A2' est un axe de révolution du deuxième composant.

Dans ce deuxième mode de réalisation, le pignon 10' comprend un axe A1', et deux portions 12a', 12b' de moindre résistance mécanique, qui sont disposées de part et d'autre d'une portion dentée 13' le long de l'axe A1'.

De préférence, le pignon 10' comprend une portion de réception 14' d'une roue de petite moyenne 30'.

Avantageusement, la ou les déformations plastiques d'une portion 12a', 12b' permettent une tenue en couple du pignon 10' sur l'axe 20' qui est suffisante pour permettre une transmission de couple entre le pignon 10' et l'axe 20', et donc pour permettre une transmission de couple entre la roue 30' et l'axe 20'.

Avantageusement, la ou les déformations plastiques d'une portion 12a', 12b' permettent une tenue en couple du pignon 10' sur l'axe 20' qui est supérieure à 3 mN.m, voire supérieure à 5 mN.m.

Préférentiellement, l'axe 20', en particulier la surface 24', peut comprendre une portion 22a', 22b' de réception disposée au niveau de la portion 12a', 12b' lorsque l'axe est inséré au sein d'une ouverture 11' du premier composant, dans laquelle le matériau déformé plastiquement au niveau de la portion 12a', 12b' peut venir se loger.

Le matériau du pignon 10' peut être un acier, en particulier un acier sans plomb comme un acier Finemac. La dureté du matériau du pignon, après traitement thermique, est de l'ordre de 500 à 700 Hv. L'éventuel traitement thermique du pignon peut avoir lieu une fois le pignon 10' assemblé sur l'axe 20'. Dans ce cas, le matériau de l'axe 20' est choisi de sorte qu'il puisse supporter le traitement thermique du pignon 10'. Plus particulièrement, le matériau de l'axe 20' est choisi de sorte que l'étape de traitement thermique du pignon 10' ne vienne prétériter ni les propriétés, ni l'intégrité géométrique dudit axe.

L'élément de guidage et/ou de fixation 23a', 23b' comprend de préférence des pivots 23a', 23b', notamment des pivots ayant une géométrie de révolution d'axe A2'. Ces pivots coopèrent de préférence avec des paliers prévus dans le bâti du mouvement horloger pour guider le dispositif horloger par rapport au bâti du mouvement relativement à l'axe A2'.

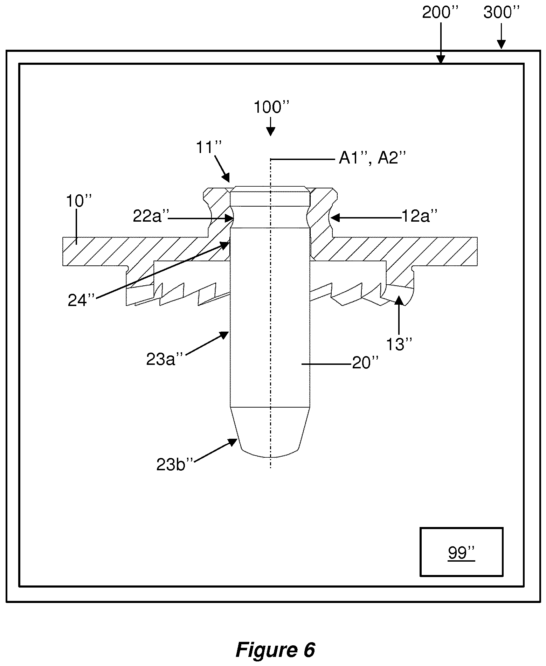

Un troisième mode de réalisation d'une pièce d'horlogerie 100" est décrit ci-après en référence à la figure 6. La pièce d'horlogerie peut être une montre, en particulier une montre-bacelet.

La pièce d'horlogerie comprend un mouvement horloger 200". Le mouvement horloger est un mouvement électronique ou un mouvement mécanique, en particulier un mouvement automatique.

Le mouvement horloger 200" comprend un dispositif horloger 100" monté mobile en rotation et en translation relativement à un bâti 99" du mouvement.

Le dispositif horloger 100" comprend :

- un premier composant 10" comprenant au moins une portion 12a" plastiquement déformable, et
- un deuxième composant 20" doté d'une surface 24", notamment une surface de révolution et/ou de guidage et/ou de fixation du premier composant relativement au deuxième composant.

Le premier composant est fixé à demeure sur le deuxième composant par déformation plastique de l'au moins une portion à l'encontre du deuxième composant, dans un plan perpendiculaire ou sensiblement perpendiculaire à un axe A2" de ladite surface 24" du deuxième composant.

De préférence, le deuxième composant 20" est également doté d'un élément 23a", 23b" de guidage et/ou de fixation du dispositif horloger relativement au mouvement horloger, en particulier relativement au bâti du mouvement horloger.

Dans ce deuxième mode de réalisation, le dispositif horloger est un mobile d'embrayage vertical 100", par exemple un mobile denté d'embrayage vertical 100".

La structure globale du dispositif horloger reste la même que celle décrite précédemment pour les premier et deuxième modes de réalisation.

Le mobile 100" comprend, comme premier composant, une roue 10" qui chemise partiellement le deuxième composant 20". La roue 10" peut, par exemple, comprendre une denture de chant 13". Le deuxième composant est un axe 20" de pivotement et de translation. L'axe 20" est principalement cylindrique et lisse. L'axe 20", en particulier l'élément de guidage et/ou de fixation, comprend de préférence un corps 23a" prévu pour être guidé, notamment pivoté, dans un palier du bâti 99", et une extrémité 23b" faisant office de pivot et coopérant avec une came ou une tige du mouvement 200", pour guider l'axe 20" en rotation et en translation relativement aux axes A1" et A2" respectifs de la roue 10" et de l'axe 20".

Dans ce troisième mode de réalisation, la roue 10" comprend une seule portion 12a" de moindre résistance mécanique, qui est, par exemple, disposée à une extrémité de la roue 10" le long de l'axe A1". L'axe 20", en particulier la surface 24", peut comprendre une portion 22a" de réception disposée au niveau de la portion 12a" lorsque l'axe 20" est inséré au sein d'une ouverture 11" de la roue 10", dans laquelle le matériau déformé plastiquement peut venir se loger.

Un mode d'exécution d'un procédé de réalisation d'un dispositif horloger 100, 100', 100" tel qu'évoqué précédemment est décrit ci-après, plus particulièrement appliqué au premier mode de réalisation. Ce procédé est applicable de manière similaire pour réaliser les deuxième et troisième modes de réalisation du dispositif horloger.

Le procédé selon l'invention comprend les étapes suivantes :

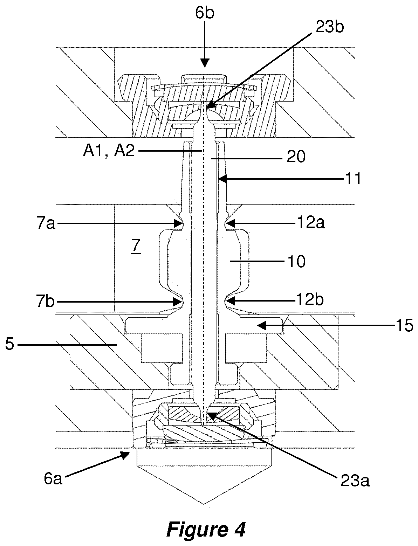

- une étape de fourniture du premier composant 10, 10', 10" comprenant au moins la portion plastiquement déformable 12a, 12b ; 12a', 12b' ; 12a", en particulier une étape de mise à disposition du premier composant préalablement positionné et maintenu dans un posage 5, notamment par le biais de la portion 15 qui est guidée et maintenu en butée au sein du posage 5, comme illustré sur la figure 4 (pour ce qui concerne le premier mode de réalisation),

- une étape de fourniture du deuxième composant 20, 20', 20" doté d'une surface 24 ; 24' ; 24" notamment d'une surface de révolution et/ou d'une surface de guidage et/ou de fixation du premier composant relativement au deuxième composant, et préférentiellement d'un élément 23a, 23b ; 23a', 23b' ; 23a", 23b" de guidage et/ou de fixation du dispositif horloger relativement au mouvement, le deuxième composant comprenant au moins une portion en creux (22a, 22b ; 22a', 22b' ; 22a"),

- une étape de positionnement du premier composant relativement au deuxième composant. Dans cette étape, on insère, par exemple, le deuxième composant dans l'ouverture traversante 11 ; 11' ; 11" du premier composant, jusqu'à un positionnement en butée d'un premier pivot 23a à l'encontre d'un premier palier 6a reproduisant un palier d'un mouvement horloger, notamment un palier d'une platine d'un mouvement horloger. Les diamètres d11 de l'ouverture du premier composant et d20 du corps principal ou de la surface 24 ; 24' ; 24" du deuxième composant sont choisis de telle sorte que le jeu radial entre le premier composant et le deuxième composant permet un centrage dans les tolérances requises, notamment pour un balancier et un ressort-spiral, en regard notamment des pivots 23a, 23b (pour ce qui concerne le premier mode de réalisation).

- une étape de fixation du premier composant sur le deuxième composant par déformation plastique de l'au moins une portion 12a, 12b ; 12a', 12b' ; 12a" du premier composant à l'encontre du deuxième composant, dans un plan perpendiculaire ou sensiblement perpendiculaire à l'axe A2, A2', A2" de ladite surface 24 ; 24' ; 24" du deuxième composant, l'au moins une portion en creux du deuxième composant recevant au moins en partie l'au moins une portion déformée (12a, 12b ; 12a', 12b' ; 12a") du premier composant.

Avantageusement, dans l'étape de positionnement, on utilise un deuxième palier 6b reproduisant un palier d'un mouvement horloger, notamment un palier d'un pont du mouvement horloger, en regard d'un deuxième pivot 23b. Dans cette configuration, les zones 12a, 12b se situent respectivement en regard des zones 22a, 22b (non visibles sur la figure 4) de l'axe 20, au jeu axial près.

Avantageusement, l'étape de fixation comprend l'utilisation d'au moins une pince pour déformer plastiquement l'au moins une portion déformable plastiquement. Alternativement ou complémentairement, l'étape de fixation peut comprendre la déformation simultanée de plusieurs portions déformables. Alternativement, les pinçages des différentes zones peuvent se succéder.

La déformation peut être réalisée par pinçage des zones 12a, 12b ; 12a', 12b' ; 12a" à l'encontre des zones 22a, 22b ; 22a', 22b' ; 22a" par le biais d'un outil 7 doté d'au moins une pince 7a, 7b.

Optionnellement, le procédé peut comprendre une étape de traitement thermique du premier composant après l'étape de fixation.

A l'issue des étapes mentionnées précédemment, les zones 12a, 12b ; 12a', 12b' ; 12a" du premier composant sont respectivement en contact avec les zones 22a, 22b ; 22a', 22b' ; 22a" du deuxième composant. Dans le cas du premier mode de réalisation, ceci induit une tenue en couple du plateau 10 sur l'axe 20, supérieure à 3 mN.m, voire supérieure à 5 mN.m, suffisante pour permettre une fixation à demeure du plateau 10 sur l'axe 20 lors du fonctionnement conventionnel de la pièce d'horlogerie et lors de chocs qu'est susceptible de subir la pièce d'horlogerie.

Dans le cas du premier mode de réalisation, dans un souci de simplification de la figure 4, les éléments 30 et 40 ne sont pas représentés. Préférentiellement, ces éléments sont assemblés sur le premier composant 10 avant l'assemblage de ce dernier sur l'axe 20. Ainsi, le pivot 23a ne subit pas les efforts induits par l'assemblage des éléments 30 et 40 sur le premier composant 10. Alternativement, le montage du premier composant 10 sur le deuxième composant 20 peut être réalisé en amont.

Avantageusement, un tel procédé d'assemblage ne soumet pas l'axe de balancier à des forces axiales ou sensiblement axiales qui pourraient s'avérer trop conséquentes pour un axe aux dimensions horlogères, en particulier si ces forces sont prévues pour être reprises par un pivot d'axe dont les dimensions sont très sensiblement inférieures à celles du corps de l'axe. Par ailleurs, un tel procédé d'assemblage ne requiert pas d'axe fait en un matériau comprenant un domaine plastique. En ce sens, un tel procédé d'assemblage constitue une alternative particulièrement intéressante aux traditionnels procédés d'assemblage d'un composant sur un axe par chassage ou par rivetage.

Quel que soit le mode de réalisation, l'au moins une portion plastiquement déformable est réalisée en un matériau présentant un domaine de déformation plastique. De préférence, cette au moins une portion est constituée par une portion dont la géométrie et/ou le matériau permet de réaliser une zone de moindre résistance mécanique. Cette moindre résistance mécanique permet de limiter les efforts mécaniques à exercer sur la portion lors de la déformation plastique de la portion.

Quel que soit le mode de réalisation, le deuxième composant comprend de préférence une surface 24 ; 24' ; 24" de guidage du premier composant relativement au deuxième composant. Cette surface est de préférence un cylindre de révolution ou une ou plusieurs portions d'un cylindre de révolution. Cette surface permet donc de positionner le premier composant relativement au deuxième composant, au moins relativement à certaines directions. Cette surface coopère de préférence avec l'ouverture du premier composant pour assurer cette fonction.

Quel que soit le mode de réalisation, le deuxième composant comprend de préférence une surface 24 ; 24' ; 24" de fixation du premier composant sur le deuxième composant. Lors de la déformation plastique du premier composant, il se forme, dans l'ouverture, un bossage, notamment un bourrelet de matière qui vient appuyer sur la surface de fixation du deuxième composant. Même après l'application de l'action de déformation du premier composant, la bosse demeure en contact contre la surface de fixation du deuxième composant du fait de la nature plastique de la déformation du premier composant. Du fait des frottements au niveau de la surface de fixation à l'interface entre le premier composant et le deuxième composant et/ou du fait d'un obstacle au niveau de la surface de fixation, des efforts tangentiels relativement aux axes A1 ; A1' ; A1" ou A2 ; A2' ; A2" peuvent être transmis d'un composant à l'autre. Par ailleurs, du fait des frottements au niveau de la surface de fixation 24 ; 24' ; 24" à l'interface entre le premier composant et le deuxième composant et/ou du fait d'un obstacle au niveau de la surface de fixation, des efforts axiaux relativement aux axes A1 ; A1' ; A1" ou A2 ; A2' ; A2" peuvent être transmis d'un composant à l'autre. Ainsi, les premier et deuxième composants sont fixés l'un à l'autre, et plus particulièrement fixés à demeure.

Avantageusement, la surface de guidage 24 ; 24' ; 24" est une surface de révolution et/ou la surface de fixation 24 ; 24' ; 24" est une surface de révolution.

Quel que soit le mode de réalisation, les axes A1 ; A1' ; A1" et A2 ; A2' ; A2" sont avantageusement confondus une fois le premier composant assemblé sur le deuxième composant, notamment fixé sur le deuxième composant.

Quel que soit le mode de réalisation, la déformation plastique est avantageusement réalisée dans un plan perpendiculaire aux axes A1 ; A1' ; A1" et A2 ; A2' ; A2". Ainsi, les actions mécaniques appliquées pour réaliser la déformation sont principalement et/ou sensiblement appliquées selon des directions contenues dans ce plan. Il en résulte que la matière est principalement déformée dans ces directions et que la hauteur de la bosse ou des bosses est déterminée selon ces directions.

Quel que soit le mode de réalisation, le deuxième composant peut être un axe 20 ; 20' ; 20" et/ou l'élément de guidage et/ou de fixation du dispositif horloger peut comprendre un ou plusieurs pivots 23a, 23b ; 23a', 23b' ; 23a", 23b", en particulier un ou plusieurs pivots d'un diamètre inférieur à 0.1 mm, voire inférieur à 0.08 mm, notamment pour le premier mode de réalisation.

Quel que soit le mode de réalisation :

- le deuxième composant peut être fait en un matériau ne présentant pas de domaine de déformation plastique et/ou le deuxième composant est en une céramique, notamment :

  - une zircone, en particulier une zircone yttriée, notamment une zircone yttriée 3%, ou
  - une alumine monocristalline, ou
  - une combinaison alumine-zircone,

  et/ou

- le deuxième composant peut présenter une dureté supérieure à 1000 Hv, voire supérieure à 1100 Hv, et/ou
- le deuxième composant peut présenter une dureté Vickers 2 à 6 fois supérieure à celle du premier composant.

Le matériau du deuxième composant 20 ; 20' ; 20" est de préférence choisi de sorte que l'étape de déformation plastique d'une portion 12a, 12b; 12a', 12b' ; 12a" du premier composant 10, 10', 10" ne vienne pas prétériter l'intégrité géométrique du deuxième composant. Avantageusement, le matériau du deuxième composant peut être choisi de sorte qu'une étape de traitement thermique du premier composant ne prétérite, ni les propriétés, ni l'intégrité géométrique du deuxième composant.

De par les propriétés intrinsèques des céramiques, qui sont extrêmement dures (duretés Vickers supérieures à 1000 Hv ou comprises entre 1100 Hv et 1600 Hv), le deuxième composant 20 ne subit aucune altération lors de l'étape de déformation plastique d'une portion du premier composant. Par ailleurs, un tel matériau est particulièrement avantageux pour une fonction d'axe, notamment d'axe de balancier. En effet, l'axe peut avantageusement comprendre des pivots 23a, 23b à ses extrémités, qui sont prévus pour coopérer, notamment coopérer par contact, avec des paliers du mouvement horloger. Ces pivots peuvent comprendre un diamètre d23, différent du diamètre d20 du corps ou de la surface 24 de l'axe 20, inférieur à 0.1 mm, voire inférieur à 0.08 mm. De par les propriétés intrinsèques des céramiques citées précédemment, les pivots ne se marquent pas lors des chocs, et la performance chronométrique d'un oscillateur de type balancier-spiral comprenant un balancier selon l'invention est ainsi maintenue dans la durée. Avantageusement, en cas de choc important, ces pivots ne se déformeront pas, *a contrario* des pivots en acier qui peuvent plier et de ce fait porter atteinte à la chronométrie du mouvement horloger. Par ailleurs, les céramiques offrent l'avantage supplémentaire d'être particulièrement peu sensibles aux champs magnétiques, et de ne pas influencer la marche de la pièce d'horlogerie lorsqu'elle est soumise à un champ magnétique, notamment un champ magnétique supérieur à 80 kA/m (1000G).

Quel que soit le mode de réalisation, le deuxième composant, en particulier la surface 24 ; 24' ; 24", peut comprendre au moins une portion en creux 22a, 22b ; 22a', 22b' ; 22a" notamment une gorge ou une rainure s'étendant sur tout le tour du deuxième composant ou s'étendant partiellement autour du deuxième composant, en particulier une gorge ou une rainure ayant une section en forme de U ou en forme de V ou en forme de rectangle, l'au moins une portion en creux recevant au moins en partie l'au moins une portion déformée 12a, 12b; 12a', 12b' ; 12a" du premier composant.

Quel que soit le mode de réalisation, l'au moins une portion plastiquement déformable peut présenter une première épaisseur e12 de paroi inférieure à une deuxième épaisseur e13 de paroi d'au moins une autre portion du premier composant ou du reste du premier composant, par exemple la première épaisseur est inférieure à la moitié de la deuxième épaisseur et/ou la première épaisseur est inférieure à 0.2 mm, voire inférieure à 0.15 mm, voire inférieure à 0.12 mm.

Quel que soit le mode de réalisation, le couple de tenue du premier composant sur le deuxième composant autour de l'axe A2 ; A2' ; A2" peut être supérieur à 3 mN.m, voire supérieur à 5 mN.m.

Quel que soit le mode de réalisation, l'ouverture 11 ; 11' ; 11" peut être traversante, à savoir qu'elle peut traverser de part en part le premier composant. Alternativement, cette ouverture pourrait être non traversante.

Quel que soit le mode de réalisation, le matériau du premier composant est avantageusement choisi de sorte à pouvoir être déformé plastiquement. Le matériau du premier composant 10, 10', 10" est par exemple un alliage cuivreux, tel qu'un alliage CuBe2 ou un alliage CuNiSn comme un alliage CuNi15Sn8 ou « ToughMet ». Le matériau du premier composant 10, 10', 10" peut également être un acier sans plomb comme un acier Finemac.

Dans les modes de réalisation décrits, le deuxième composant 20 ; 20'; 20" est un axe de guidage en rotation à l'aide de l'élément de guidage 23a, 23b ; 23a', 23b' ; 23a" du premier composant qui est rapporté et fixé sur le deuxième composant. Complémentairement, dans le troisième mode de réalisation décrit, le deuxième composant est aussi un axe de guidage en translation à l'aide de l'élément de guidage 23b" du premier composant qui est rapporté et fixé sur le deuxième composant. Alternativement, dans un autre mode de réalisation, le deuxième composant pourrait être uniquement un axe de guidage en translation du premier composant qui est rapporté et fixé sur le deuxième composant.

Alternativement encore, le deuxième composant pourrait comprendre un élément de fixation, en particulier une surface de fixation, du dispositif horloger. Par exemple, le deuxième composant pourrait être prévu pour être fixé, via l'élément ou la surface de fixation, sur un mouvement, notamment sur une ébauche du mouvement. Dans une telle réalisation, le dispositif horloger pourrait être complètement fixe par rapport à un bâti du mouvement.

Quel que soit le mode de réalisation, le premier composant peut chemiser ou recouvrir au moins partiellement le deuxième composant sur quasiment l'entier de sa longueur mesurée selon les axes A1, A1', A1" ou A2, A2', A2". Par exemple, le premier composant peut chemiser ou recouvrir le deuxième composant sur toute sa longueur à l'exception de pivots, et éventuellement à l'exception de tigerons. Alternativement, le premier composant peut chemiser ou recouvrir une portion plus réduite du deuxième composant. De préférence, le premier composant peut chemiser ou recouvrir une portion d'au moins 50%, voire au moins 70%, de la longueur du deuxième composant.

L'invention porte aussi sur un premier composant en tant que tel qui est destiné à la réalisation d'un dispositif horloger selon l'invention.

L'invention porte encore sur un deuxième composant en tant que tel qui est destiné à la réalisation d'un dispositif horloger selon l'invention.

Dans tout ce document, par « fixation à demeure », nous entendons une fixation permettant une tenue en couple du premier composant sur le deuxième composant qui évite tout déplacement du premier composant relativement au deuxième composant lors du fonctionnement normal de la pièce d'horlogerie. Par exemple, la tenue en couple est supérieure à 3 mN.m, voire supérieure à 5 mN.m.

Dans tout ce document, par « déformation plastique », nous entendons indistinctement l'action ou le résultat d'une telle action.

## Revendications

**1.** Dispositif horloger (100 ; 100' ; 100") comprenant :

- un premier composant (10 ; 10' ; 10") comprenant au moins une portion (12a, 12b ; 12a' ; 12b' ; 12a") plastiquement déformable, et
- un deuxième composant (20 ; 20' ; 20") doté d'une surface (24 ; 24' ; 24"), notamment une surface de révolution et/ou de guidage et/ou de fixation du premier composant relativement au deuxième composant,

le premier composant étant fixé à demeure sur le deuxième composant par déformation plastique de l'au moins une portion (12a, 12b; 12a', 12b' ; 12a") à l'encontre du deuxième composant, dans un plan perpendiculaire ou sensiblement perpendiculaire à un axe (A2 ; A2' ; A2") de ladite surface (24 ; 24' ; 24") du deuxième composant,

**caractérisé en ce que** le deuxième composant, notamment la surface (24 ; 24' ; 24"), comprend au moins une portion en creux (22a, 22b ; 22a', 22b' ; 22a"), notamment une gorge ou une rainure s'étendant sur tout le tour du deuxième composant ou s'étendant partiellement autour du deuxième composant, en particulier une gorge ou une rainure ayant une section en forme de U ou en forme de V ou en forme de rectangle, l'au moins une portion en creux recevant au moins en partie l'au moins une portion déformée (12a, 12b ; 12a', 12b' ; 12a") du premier composant.

**2.** Dispositif horloger selon la revendication précédente, **caractérisé en ce que** le deuxième composant est un axe (20 ; 20' ; 20") et/ou **en ce que** le deuxième composant comprend un élément (23a, 23b ; 23a', 23b' ; 23a", 23b") de guidage et/ou de fixation du dispositif horloger, en particulier un ou plusieurs pivots (23a, 23b ; 23a', 23b' ; 23a", 23b"), notamment un ou plusieurs pivots d'un diamètre inférieur à 0.1 mm, voire inférieur à 0.08 mm.

**3.** Dispositif horloger selon l'une des revendications précédentes, **caractérisé en ce que** le deuxième composant est en un matériau ne présentant pas de domaine de déformation plastique et/ou **en ce que** le deuxième composant est fait en une céramique, notamment :

- une zircone, en particulier une zircone yttriée, notamment une zircone yttriée 3%, ou
- une alumine monocristalline, ou
- une combinaison alumine-zircone,

et/ou **en ce que** le deuxième composant présente une dureté supérieure à 1000 Hv, voire supérieure à 1100 Hv, ou le deuxième composant présente une dureté Vickers 2 à 6 fois supérieure à celle du premier composant.

4. Dispositif horloger selon l'une des revendications précédentes, **caractérisé en ce que** l'au moins une portion plastiquement déformable présente une première épaisseur (e12) de paroi inférieure à une deuxième épaisseur (e13) de paroi d'au moins une autre portion du premier composant, par exemple la première épaisseur est inférieure à la moitié de la deuxième épaisseur et/ou la première épaisseur est inférieure à 0.2 mm, voire inférieure à 0.15 mm, voire inférieure à 0.12 mm.

5. Dispositif horloger selon l'une des revendications précédentes, **caractérisé en ce que** le premier composant est un plateau de balancier, notamment un plateau chemisant ou recouvrant au moins partiellement le deuxième composant.

6. Dispositif horloger selon la revendication précédente, **caractérisé en ce que** le plateau comprend une portion (13) de réception d'un volant d'inertie (30) et/ou une portion (14) de réception d'une virole (40) d'un ressort-spiral et/ou une portion (15) formant un disque comprenant une cheville (16).

7. Dispositif horloger selon l'une des revendications 1 à 4, **caractérisé en ce que** le premier composant est un pignon (10'), notamment un pignon chemisant ou recouvrant au moins partiellement le deuxième composant.

8. Dispositif horloger selon la revendication précédente, **caractérisé en ce que** le pignon comprend une portion (14') de réception d'une roue dentée (30').

9. Dispositif horloger selon l'une des revendications précédentes, **caractérisé en ce que** le couple de tenue du premier composant sur le deuxième composant autour de l'axe (A2 ; A2' ; A2") est supérieur à 3 mN.m, voire supérieur à 5 mN.m.

10. Procédé de réalisation d'un dispositif horloger (100 ; 100' ; 100") selon l'une des revendications précédentes, le procédé comprenant les étapes suivantes :

- une étape de fourniture d'un premier composant (10 ; 10' ; 10") comprenant au moins une portion plastiquement déformable (12a, 12b ; 12a', 12b' ; 12a"),
- une étape de fourniture d'un deuxième composant (20 ; 20' ; 20") doté d'une surface (24 ; 24' ; 24"), notamment une surface de révolution et/ou une surface de guidage et/ou de fixation du premier composant relativement au deuxième composant, et éventuellement doté d'un élément (23a, 23b ; 23a', 23b' ; 23a", 23b") de guidage et/ou de fixation du dispositif horloger, le deuxième composant comprenant au moins une portion en creux (22a, 22b ; 22a', 22b' ; 22a"),
- une étape de positionnement du premier composant relativement au deuxième composant,
- une étape de fixation du premier composant sur le deuxième composant par déformation plastique de l'au moins une portion (12a, 12b; 12a', 12b' ; 12a") du premier composant à l'encontre du deuxième composant, dans un plan perpendiculaire ou sensiblement perpendiculaire à l'axe (A2 ; A2' ; A2") de ladite surface (24 ; 24' ; 24") du deuxième composant, l'au moins une portion en creux du deuxième composant recevant au moins en partie l'au moins une portion déformée (12a, 12b ; 12a', 12b' ; 12a") du premier composant.

11. Procédé selon la revendication précédente, **caractérisé en ce que** l'étape de fixation comprend l'utilisation d'au moins une pince pour déformer plastiquement l'au moins une portion et/ou **en ce que** l'étape de fixation comprend la déformation simultanée de plusieurs portions déformables.

12. Mouvement horloger (200 ; 200' ; 200") comprenant un dispositif horloger selon l'une des revendications 1 à 9, le dispositif horloger étant monté mobile en rotation et/ou en translation relativement à un bâti (99 ; 99' ; 99") du mouvement ou étant fixé au bâti (99 ; 99' ; 99") du mouvement.

13. Pièce d'horlogerie (300 ; 300' ; 300"), notamment montre bracelet, comprenant un dispositif horloger (100 ; 100' ; 100") selon l'une des revendications 1 à 9 et/ou un mouvement horloger (200 ; 200' ; 200") selon la revendication précédente.

**Patentansprüche**

1. Uhrvorrichtung (100; 100'; 100"), umfassend:

- eine erste Komponente (10; 10'; 10"), die mindestens einen plastisch verformbaren Abschnitt (12a, 12b; 12a', 12b'; 12a") umfasst, und
- eine zweite Komponente (20; 20'; 20"), die mit einer Fläche (24; 24'; 24") zur Umdrehung und/oder Führung und/oder Fixierung der ersten Komponente relativ zu der zweiten Komponente versehen ist,

wobei die erste Komponente durch plastische Verformung des mindestens einen Abschnitts (12a, 12b; 12a', 12b'; 12a") gegen die zweite Komponente in einer senkrecht oder im Wesentlichen senkrecht zu einer Achse (A2; A2'; A2") der Fläche (24; 24'; 24") der zweiten Komponente verlaufenden Ebene dauerhaft an der zweiten Komponente fixiert ist, **dadurch gekennzeichnet, dass** die zweite Komponente, insbesondere die Fläche (24; 24'; 24"), mindestens einen vertieften Abschnitt (22a, 22b; 22a'; 22b'; 22a"), insbesondere eine Kehle oder eine Nut, umfasst, der sich über den gesamten Umfang der zweiten Komponente erstreckt oder der sich teilweise um die zweite Komponente herum erstreckt, insbesondere eine Kehle oder eine Nut mit einem U-förmigen oder V-förmigen oder rechteckigen Querschnitt, wobei der mindestens eine vertiefte Abschnitt mindestens zum Teil einen verformten Abschnitt (12a, 12b; 12a', 12b'; 12a") der ersten Komponente aufnimmt.

2. Uhrvorrichtung nach dem vorhergehenden Anspruch, **dadurch gekennzeichnet, dass** die zweite Komponente eine Achse (20; 20'; 20") ist, und/oder dadurch, dass die zweite Komponente ein Element (23a, 23b; 23a', 23b'; 23a", 23b") zur Führung und/oder Fixierung der Uhrvorrichtung umfasst, insbesondere einen oder mehrere Zapfen (23a, 23b; 23a', 23b'; 23a", 23b"), im Besonderen einen oder mehrere Zapfen mit einem Durchmesser von weniger als 0,1 mm, sogar weniger als 0,08 mm.

3. Uhrvorrichtung nach einem der vorhergehenden Ansprüche, **dadurch gekennzeichnet, dass** die zweite Komponente aus einem Material ist, das keinen plastischen Verformungsbereich aufweist, und/oder dadurch, dass die zweite Komponente aus einer Keramik hergestellt ist, im Besonderen:

- einem Zirkonoxid, insbesondere einem Yttrium-stabilisierten Zirkonoxid, im Besonderen einem 3 %igen Yttrium-stabilisierten Zirkonoxid, oder
- einem monokristallinen Aluminiumoxid, oder
- einer Aluminiumoxid/Zirkonoxid-Kombination,

und/oder dadurch, dass die zweite Komponente eine Härte von mehr als 1000 Hv, sogar mehr als 1100 Hv aufweist oder die zweite Komponente eine Vickers-Härte aufweist, die 2 bis 6 Mal so groß wie die der ersten Komponente ist.

4. Uhrvorrichtung nach einem der vorhergehenden Ansprüche, **dadurch gekennzeichnet, dass** der mindestens eine plastisch verformbare Abschnitt eine erste Wanddicke (e12) aufweist, die geringer als eine zweite Wanddicke (e13) mindestens eines anderen Abschnitts der ersten Komponente ist, die erste Dicke beispielsweise weniger als die Hälfte der zweiten Dicke beträgt und/oder die erste Dicke weniger als 0,2 mm, sogar weniger als 0,15 mm, sogar weniger als 0,12 mm beträgt.

5. Uhrvorrichtung nach einem der vorhergehenden Ansprüche, **dadurch gekennzeichnet, dass** die erste Komponente ein Unruhteller ist, insbesondere ein Teller, der mindestens teilweise die zweite Komponente umhüllt oder bedeckt.

6. Uhrvorrichtung nach dem vorhergehenden Anspruch, **dadurch gekennzeichnet, dass** der Teller einen Abschnitt (13) zur Aufnahme eines Schwungrads (30) und/oder einen Abschnitt (14) zur Aufnahme einer Spiralrolle (40) einer Spiralfeder und/oder einen Abschnitt (15), der eine einen Stift (16) umfassende Scheibe bildet, umfasst.

7. Uhrvorrichtung nach einem der Ansprüche 1 bis 4, **dadurch gekennzeichnet, dass** die erste Komponente ein Zapfen (10') ist, insbesondere ein Zapfen, der mindestens teilweise die zweite Komponente umhüllt oder bedeckt.

8. Uhrvorrichtung nach dem vorhergehenden Anspruch, **dadurch gekennzeichnet, dass** der Zapfen einen Abschnitt (14') zur Aufnahme eines Zahnrads (30') umfasst.

9. Uhrvorrichtung nach einem der vorhergehenden Ansprüche, **dadurch gekennzeichnet, dass** das Haltemoment der ersten Komponente an der zweiten Komponente um die Achse (A2; A2'; A2") herum mehr als 3 mN.m, sogar mehr als 5 mN.m beträgt.

10. Verfahren zur Herstellung einer Uhrvorrichtung (100; 100'; 100") nach einem der vorhergehenden Ansprüche, wobei das Verfahren die folgenden Schritte umfasst:

- einen Schritt des Bereitstellens einer ersten Komponente (10; 10'; 10"), die mindestens einen plastisch verformbaren Abschnitt (12a, 12b; 12a', 12b'; 12a") umfasst,
- einen Schritt des Bereitstellens einer zweiten Komponente (20; 20'; 20"), die mit einer Fläche (24; 24'; 24") zur Umdrehung und/oder einer Fläche zur Führung und/oder Fixierung der ersten Komponente relativ zu der zweiten Komponente versehen ist und gegebenenfalls mit einem Element (23a, 23b; 23a', 23b'; 23a", 23b") zur Führung und/oder Fixierung der Uhrvorrichtung versehen ist, wobei die zweite Komponente mindestens einen vertieften Abschnitt (22a, 22b; 22a', 22b'; 22a") umfasst,

- einen Schritt des Positionierens der ersten Komponente relativ zu der zweiten Komponente,

- einen Schritt des Fixierens der ersten Komponente an der zweiten Komponente durch plastische Verformung des mindesten einen Abschnitts (12a, 12b; 12a', 12b'; 12a") der ersten Komponente gegen die zweite Komponente in einer senkrecht oder im Wesentlichen senkrecht zu der Achse (A2; A2'; A2") der Fläche (24; 24'; 24") der zweiten Komponente verlaufenden Ebene, wobei der mindestens eine vertiefte Abschnitt der zweiten Komponente mindestens zum Teil den mindestens einen verformten Abschnitt (12a, 12b; 12a', 12b'; 12a") der ersten Komponente aufnimmt.

**11.** Verfahren nach dem vorhergehenden Anspruch, **dadurch gekennzeichnet, dass** der Schritt des Fixierens die Verwendung mindestens einer Zange zum plastischen Verformen des mindesten einen Abschnitts umfasst, und/oder dadurch, dass der Schritt des Fixierens das gleichzeitige Verformen von mehreren verformbaren Abschnitten umfasst.

**12.** Uhrwerk (200; 200'; 200"), das eine Uhrvorrichtung nach einem der Ansprüche 1 bis 9 umfasst, wobei die Uhrvorrichtung relativ zu einem Gestell (99; 99'; 99") des Uhrwerks rotatorisch und/oder translatorisch beweglich gelagert ist oder an dem Gestell (99; 99'; 99") des Werks fixiert ist.

**13.** Uhr (300; 300'; 300"), insbesondere Armbanduhr, die eine Uhrvorrichtung (100; 100'; 100") nach einem der Ansprüche 1 bis 9 und/oder ein Uhrwerk (200; 200'; 200") nach dem vorhergehenden Anspruch umfasst.

**Claims**

**1.** A horology device (100; 100'; 100") comprising:

- a first component (10; 10'; 10") comprising at least one plastically deformable portion (12a, 12b; 12a', 12b'; 12a"), and
- a second component (20; 20'; 20") provided with a surface (24; 24'; 24"), notably a surface of revolution and/or of guidance and/or of attachment of the first component relative to the second component, the first component being fixed permanently to the second component by plastic deformation of the at least one portion (12a, 12b; 12a', 12b'; 12a") against the second component, in a plane perpendicular or substantially perpendicular to an axis (A2; A2'; A2") of said surface (24; 24'; 24") of the second component,

wherein the second component, notably the surface (24; 24'; 24"), comprises at least one recessed portion (22a, 22b; 22a', 22b'; 22a"), notably a groove extending all the way around the second component or extending part of the way around the second component, particularly a groove having a U-shaped or V-shaped or rectangular cross section, the at least one recessed portion accepting at least in part the at least one deformed portion (12a, 12b; 12a', 12b'; 12a") of the first component.

**2.** The horology device as claimed in the preceding claim, wherein the second component is a staff (20; 20'; 20") and/or wherein the second component comprises an element (23a, 23b; 23a', 23b'; 23a", 23b") for guidance and/or for fixing of the horology device, particularly one or more pivots (23a, 23b; 23a', 23b'; 23a", 23b"), notably one or more pivots of a diameter smaller than 0.1 mm, or even smaller than 0.08 mm.

**3.** The horology device as claimed in one of the preceding claims, wherein the second component is made from a material that does not have a plastic deformation domain and/or wherein the second component is made of ceramic, notably:

- a zirconia, particularly an yttrium-doped zirconia, notably a 3% yttrium-doped zirconia, or
- a monocrystalline alumina, or
- an alumina-zirconia combination,

and/or wherein the second component has a hardness greater than 1000 Hv, or even greater than 1100 Hv, or the second component has a Vickers hardness 2 to 6 times higher than that of the first component.

**4.** The horology device as claimed in one of the preceding claims, wherein the at least one plastically deformable portion has a first wall thickness (e12) smaller than a second wall thickness (e13) of at least one other portion of the first component, for example the first thickness is less than half the second thickness and/or the first thickness is less than 0.2 mm, or even less than 0.15 mm, or even less than 0.12 mm.

**5.** The horology device as claimed in one of the preceding claims, wherein the first component is a balance wheel plate, notably a plate at least partially jacketing or covering the second component.

**6.** The horology device as claimed in the preceding claim, wherein the plane comprises a portion (13) for accepting a flywheel (30) and/or a portion (14) for accepting a collet (40) of a hairspring and/or a portion (15) forming a disk comprising a pin (16).

7. The horology device as claimed in one of claims 1 to 4, wherein the first component is a pinion (10'), notably a pinion at least partially jacketing or covering the second component.

8. The horology device as claimed in the preceding claim, wherein the pinion comprises a portion (14') accepting a gearwheel (30').

9. The horology device as claimed in one of the preceding claims, wherein the torque resistance of the first component on the second component about the axis (A2; A2'; A2") is greater than 3 mN.m, or even greater than 5 mN.m.

10. A method for producing a horology device (100; 100'; 100") as claimed in one of the preceding claims, the method comprising the following steps:

- a step of supplying a first component (10; 10'; 10") comprising at least one plastically deformable portion (12a, 12b; 12a', 12b'; 12a"),
- a step of supplying a second component (20; 20'; 20") provided with a surface (24; 24'; 24"), notably a surface of revolution and/or a surface of guidance and/or of attachment of the first component relative to the second component, and possibly provided with an element (23a, 23b; 23a', 23b'; 23a", 23b") for guidance and/or attachment of the horology device, the second component comprising at least one recessed portion (22a, 22b; 22a', 22b'; 22a"),
- a step of positioning the first component relative to the second component,
- a step of fixing the first component to the second component by plastic deformation of the at least one portion (12a, 12b; 12a', 12b'; 12a") of the first component against the second component, in a plane perpendicular or substantially perpendicular to the axis (A2; A2'; A2") of said surface (24; 24'; 24") of the second component, the at least one recessed portion of the second component accepting at least in part the at least one deformed portion (12a, 12b; 12a', 12b'; 12a") of the first component.

11. The method as claimed in the preceding claim, wherein the fixing step comprises the use of at least one set of pliers to plastically deform the at least one portion and/or wherein the fixing step comprises the simultaneous plastic deformation of several deformable portions.

12. A horology movement (200; 200'; 200") comprising a horology device as claimed in one of claims 1 to 9, the horology device being mounted with the ability to rotate and/or to translate relative to a frame (99; 99'; 99") of the movement or being fixed to the frame (99; 99'; 99") of the movement.

13. A timepiece (300; 300'; 300"), notably a wristwatch, comprising a horology device (100; 100'; 100") as claimed in one of claims 1 to 9 and/or a horology movement (200; 200'; 200") as claimed in the preceding claim.

*Figure 1*

11

A1

10

14

12a

e12

d11

e13

13

e12

12b

15

**Figure 2**

23b

A1, A2

12a

10

12b

16

23a

**Figure 3**

**Figure 4**

Figure 5

*Figure 6*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013064390 A1

- EP 2469356 A1